# EUROPEAN PATENT SPECIFICATION

(11) **EP 3 861 582 B1**
(45) Date of publication and mention of the grant of the patent: **03.01.2024**
(21) Application number: 19787330.0
(22) Date of filing: 04.10.2019
(51) Int. Cl.: H01M 4/38, H01M 4/505, H01M 4/525, H01M 4/58, H01M 4/583, H01M 10/0567, H01M 10/0568, H01M 10/0569

(54) **IMPROVED RECHARGEABLE BATTERIES AND PRODUCTION THEREOF**
VERBESSERTE WIEDERAUFLADBARE BATTERIEN UND DEREN HERSTELLUNG
BATTERIES RECHARGEABLES AMÉLIORÉES ET LEUR PRODUCTION

(30) Priority: 04.10.2018 FI 20185836
(43) Date of publication of application: 11.08.2021
(73) Proprietor: Broadbit Batteries Oy, 02150 Espoo (FI)
(72) Inventor: KOVACS, Andras, 02360 Espoo (FI); BROWN, David, 00140 Helsinki (FI)
(74) Representative: Papula Oy
(86) International application number: PCT/FI2019/050714
(87) International publication number: WO 2020/070391

(56) References cited:
- EP-A1- 3 038 194
- WO-A1-03/054894
- WO-A1-2008/138132
- WO-A1-2019/041696
- US-A1- 2016 020 488
- JIAO SHUHONG ET AL: "Stable cycling of high-voltage lithium metal batteries in ether electrolytes", NATURE ENERGY, NATURE PUBLISHING GROUP UK, LONDON, vol. 3, no. 9, 2 July 2018 (2018-07-02), pages 739-746, XP036587193, DOI: 10.1038/S41560-018-0199-8 [retrieved on 2018-07-02]

## Description

### FIELD OF THE INVENTION

The present description relates to an electrolyte for an electrochemical battery cell. The present description further relates to an electrochemical cell comprising an electrolyte according to the present description.

### BACKGROUND

High performance and low cost batteries are advantageous for many applications, e.g. energy storage for electric vehicles or electric grids. The presently market-leading battery technology is the lithium-ion battery technology. State-of-the-art batteries employ graphite-based anodes, metal-oxide cathodes, and organic electrolytes. The commercially preferred cathode formulation is based on a nickel-cobalt-manganese oxide (NCM) formulation. However, the future prospects of this cathode formulation are hindered by the limited supply of cobalt, which is a known bottleneck for a future increase in battery production volumes. The commercially preferred electrolyte formulation is based on a mixture of carbonate solvents with LiPF₆ electrolyte salt. However, the high flammability of these solvents present a safety risk, and causes numerous battery fire accidents annually. Moreover, the low chemical stability of the LiPF₆ electrolyte salt restricts the battery operating temperature range and necessitates complex and costly thermal management of battery packs. In order to improve the operating temperature range of batteries, the low chemical stability LiPF₆ electrolyte salt should be replaced by a more stable salt, which gives at least similar electrolyte conductivity.

The present invention aims to solve the above mentioned problems with state-of-the-art battery cells. The operating voltage and energy density performance of the disclosed invention is at the same level as the performance of presently market-leading battery cells, thereby these disclosed improvements do not come at the expense of battery performance. The utility of the herein disclosed battery electrolyte is derived from three aspects: i) it allows stable cycling of advanced Li-ion battery electrodes; ii) it allows an extended operating temperature range of Li-ion batteries; and iii) it improves battery safety by making the electrolyte less reactive and volatile than conventional LiPF₆ electrolyte salt in carbonate solvents. Consequently, the described invention is beneficial to industry and commerce.

WO 2008/138132 A1 discloses a liquid electrolyte having liquid dinitrile (e.g. succinonitrile (SCN)) and an ionic salt that may be used in an electrochemical device. The liquid electrolyte may comprise one or more ionic salts dissolved in the dinitrile such that the melting point of the dinitrile is depressed to below the operating temperature.

EP 3038194 A1 discloses a rechargeable lithium battery comprising: a positive electrode comprising a positive active material; and an electrolyte solution comprising a solvent and an additive, wherein the positive active material comprising a lithium-containing transition metal oxide, the solvent comprises a hydrofluoroether, and the additive comprises a first additive and at least one selected from a second additive, a third additive represented, and a fourth additive.

WO 03/054894 A1 discloses a polymer gel hybrid solar cell.

US 2016/020488 A1 discloses an electrolyte additive for a lithium battery, an electrolyte including the electrolyte additive, and a lithium battery including the electrolyte. The electrolyte additive for a lithium battery includes a sulfonylmethylisocyanide-based compound.

Jiao Shuhong et al., in "Stable cycling of high-voltage lithium metal batteries in ether electrolytes" (Nature Energy, vol. 3, no. 9, pp. 739 - 746), disclose the use of lithium-difluoro(oxalato)borate (LiDFOB) as alternative to Lithium bis(trifluoromethanesulfonyl)imide (LiTFSI) and the use of lithium as cathode active material.

WO 2019/041696 A1 discloses a non-aqueous electrolyte for a lithium ion battery, and a lithium ion battery comprising the non-aqueous electrolyte. The non-aqueous electrolyte comprises a solvent, a lithium salt and a maleic anhydride copolymer.

### SUMMARY OF THE INVENTION

An electrolyte for an electrochemical battery cell is disclosed. The electrolyte may comprise a carbonate : nitrile type solvent mixture based electrolyte. The electrolyte may comprise one or more polymer additives. The electrolyte may comprise a dimethylcarbonate (DMC) : malononitrile (MLN) solvent mixture based electrolyte.

The electrolyte may comprise a dimethylcarbonate (DMC) : (succinonitrile (SCN) : malononitrile (MLN)) solvent mixture based electrolyte.

The alkali salt cation may be a lithium cation. The alkali salt anion may comprise an oxalato-borate group. The alkali salt may be lithium-difluoro(oxalato)borate (LiDFOB). The electrolyte may comprise one or more electrolyte additives. The electrolyte additive may be an SEI improving additive. The nitrile type solvent may comprise malononitrile (MLN). The nitrile type solvent may comprise succinonitrile (SCN). The nitrile type solvent may be succinonitrile (SCN). The nitrile type solvent may comprise a mixture of MLN and SCN. The carbonate type solvent may be dimethylcarbonate (DMC). The electrolyte additive may be fluoro-ethylenecarbonate (FEC). The polymer additive may be poly(methyl vinyl ether - alt - maleic anhydride).

An electrochemical cell comprising the electrolyte of the present disclosure is also disclose. The electrochemical cell may comprise additionally a cathode and an anode. The cathode may comprise LiMnₓFe₁₋ₓPO₄ (LMFP or LFMP), lithium iron phosphate (LFP), lithium cobalt oxide (LCO), lithium manganese oxide (LMO), and/or lithium nickel manganese cobalt oxide (NMC). The anode may comprise carbon, lithium titanate (LTO), tin/cobalt alloy and/or silicon/carbon. The carbon may be graphite and/or hard carbon. The anode may comprise a metallic alkali metal. The metallic alkali metal may be metallic lithium. The electrochemical cell may be used in a device.

Table 1 summarizes the benefits of the herein disclosed electrolyte formulations. It is highly advantageous for battery production that these benefits may be simultaneously achieved, and it is highly challenging to discover such electrolyte formulations. In comparison to currently feasible Li-ion cells' energy density, improved cell level energy density becomes feasible through the disclosed electrolyte formulations' ability to simultaneously support the stable cycling of advanced cathode materials, such as LMFP, as well as metallic alkali metal based anodes, such as metallic lithium based anodes.

**Table 1: Summary of benefits enabled by the herein disclosed electrolyte formulations**

| Benefit | Electrolyte contribution to achieving the benefit |
|---|---|
| Higher maximum operating temperature than current state-of-the-art battery cells | The disclosed electrolyte formulations allow higher than 60 °C maximum temperature, which is not possible with LiPF₆ salt employing electrolyte formulations. The preferred LiDFOB salt can be more cost-effectively produced than LiTFSI or LiFSI salts, and the preferred electrolyte formulations yield sufficiently high ionic conductivity with the LiDFOB salt usage. |
| Lower minimum operating temperature than current state-of-the-art battery cells | The preferred electrolyte formulations stay liquid down to at least -35 °C, which allows lower operating temperature limit than currently state-of-the-art electrolyte formulations. |
| Stable cycling of advanced battery cathodes | As shown in the examples section, the preferred electrolyte formulations allow at least 4.2 V charging voltage with aluminum current collector at the cathode side, and supports stable cycling of advanced cathodes, such as LMFP. |
| Stable cycling of advanced battery anodes | With a polymer additive, the disclosed electrolyte formulations support stable long-term cycling of metallic lithium anodes. Preferred electrolyte formulations also support stable cycling of current state-of-the-art anodes, such as graphite or hard carbon anodes. |
| Enhanced battery safety | The disclosed electrolyte formulations improve battery safety in multiple ways: i) they are more thermally stable than electrolytes based on LiPF₆ salt in carbonate solvents, ii) they have less fire hazard due to the low electrolyte volatility, and iii) with the disclosed polymer additives, there is no dendrite growth from the anode, even under over-charging conditions, which reduces the internal short-circuiting risk. |

### BRIEF DESCRIPTION OF THE DRAWINGS

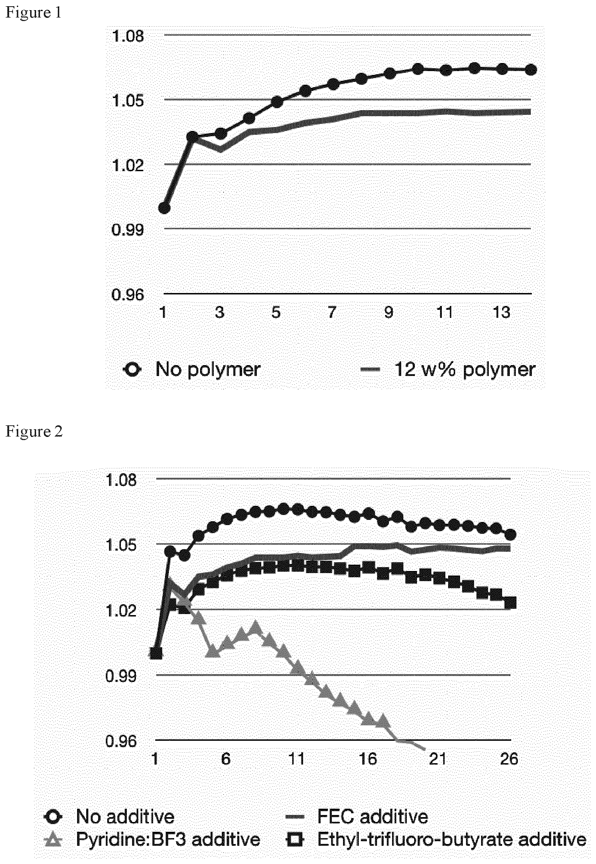

Figure 1: The discharge capacity evolution of LMFP cathodes with respect to the charge-discharge cycle number, wherein the electrolyte solvent comprises 1:1 volumetric ratio of DMC : SCN, 2 weight! FEC electrolyte additive, 1 molar LiDFOB salt, and it is indicated in the figure whether or not 12 weight% poly(methyl vinyl ether - alt - maleic anhydride) polymer has been added into the electrolyte. The vertical axis is normalized to the capacity of the first cycle.
Figure 2: The discharge capacity evolution of LMFP cathodes with respect to the charge-discharge cycle number, wherein the electrolyte solvent comprises 1:1 volumetric ratio of DMC : SCN, 12 weight% poly(methyl vinyl ether - alt - maleic anhydride) polymer additive, 1 molar LiDFOB salt, and the employed electrolyte additive is indicated in the figure. The vertical axis is normalized to the capacity of the first cycle.

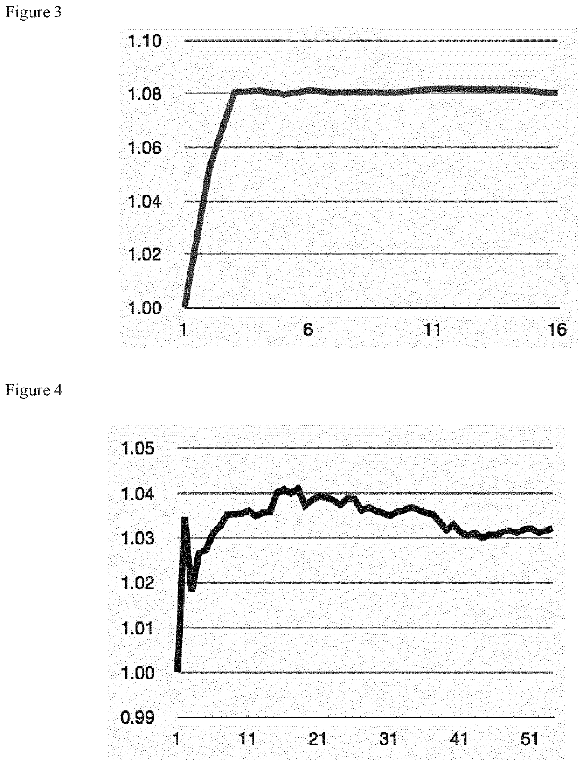

Figure 3: The discharge capacity evolution of a graphite anode with respect to the charge-discharge cycle number wherein the electrolyte solvent comprises 1:1 volumetric ratio of DMC : SCN, 12 weight% poly(methyl vinyl ether - alt - maleic anhydride) polymer additive, 2 weight% FEC electrolyte additive, and 1 molar LiDFOB salt. The vertical axis is normalized to the capacity of the first cycle.
Figure 4: The discharged energy evolution with respect to the charge-discharge cycle number of a cell comprising metallic Li anode and LMFP cathode. The electrolyte solvent comprises 1:1 volumetric ratio of DMC : SCN, 12 weight% poly (methyl vinyl ether - alt - maleic anhydride) polymer additive, 1 molar LiDFOB salt, and 2 weight% FEC electrolyte additive. The vertical axis is normalized to the discharged energy of the first cycle.

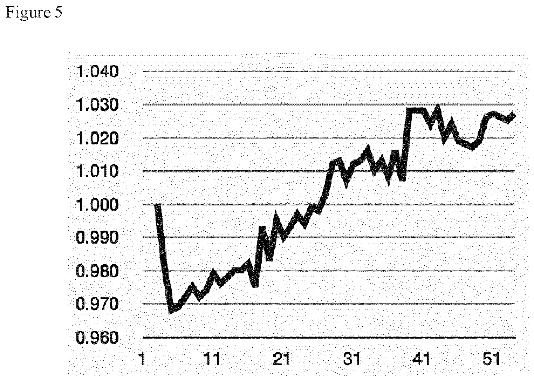

Figure 5: The charging time evolution with respect to the charge-discharge cycle number of a cell comprising metallic Li anode and LMFP cathode. The electrolyte solvent comprises 1:1 volumetric ratio of DMC : SCN, 12 weight% poly(methyl vinyl ether - alt - maleic anhydride) polymer additive, 1 molar LiDFOB salt, and 2 weight! FEC electrolyte additive. The vertical axis is normalized to the charging time of the first cycle.

### DETAILED DESCRIPTION OF THE EMBODIMENTS

Detailed embodiments of the present invention are disclosed herein with the reference to accompanying drawings.

We herein disclose electrolyte formulations encompassed by the invention. The electrolyte may be used in an electrochemical cell. An electrochemical cell may comprise, at least, an anode, a cathode and the electrolyte at least partially between the anode and cathode. An electrochemical cell may further comprise a separator between the anode and cathode. An electrochemical cell may further comprise one or more charge carriers (current collectors). An anode and/or a cathode may also be a charge carrier. An electrochemical cell may further comprise a housing.

The electrolyte salt of the electrolyte may comprise an alkali metal salt. The alkali metal cation of the of the alkali metal salt may comprise lithium cation. The anion of the alkali metal salt may comprise an oxalato-borate group. The anion of the alkali metal salt may further comprise one or more halogen groups.

One preferred example of an electrolyte salt according to the invention is lithium-difluoro(oxalato)borate (LiDFOB), which comprises an oxalato-borate group, and wherein the alkali metal is Li, and wherein the halogen is F. LiDFOB is found to remain stable at elevated temperature, to be less water sensitive than LiPF₆, and to be suitable for battery charging at 4.2 V or higher voltage. Preferably, the molar concentration of alkali metal salts in the electrolyte is between 0.01 and 5 molar and more preferably between 0,1 and 2 molar and more preferably between 0.5 and 1.5 molar and most preferably between 0.67 and 1.2 molar and more preferably between 0.9 and 1.1 molar and most preferably approximately 1 molar. Other alkali metal salts and molar concentrations are possible according to the invention. Here, alkali metals include, but are not limited to, Li, Na, K, Rb, Cs, and Fr. Here halogens include, but are not limited to, F, Cl, Br, I, and At.

The herein disclosed electrolyte may further comprise a carbonate : nitrile type solvent mixture. One preferred example of a carbonate type solvent according to the invention is dimethylcarbonate (DMC). Other carbonate type solvents are possible according to the invention. One preferred example of a nitrile type solvent according to the invention is succinonitrile (CN(CH₂)₂CN or SCN). One preferred example of a nitrile type solvent according to the invention is malononitrile (CN(CH₂)CN or MLN). A nitrile type solvent according to the invention may comprise a single nitrile solvent, a mixture of nitrile solvents or a mixture of nitrile and other solvents. Other nitrile type solvents are possible according to the invention. The carbonate : nitrile type solvent volume mixture ratio is preferably between 0.001:1 and 1:0.001 and more preferably between 0.01:1 and 1:0.01 and more preferably between 0.1:1 and more preferably between 0.5:1 and 1:0.5 and more preferably between 0.9:1 and 1:0.9 and most preferably approximately 1:1. It is known that LiDFOB salt based electrolytes have approximately 3 mS/cm conductivity when the nitrile solvent component is adiponitrile (CN(CH₂)₄CN) [1]. It has been surprisingly discovered that, even though SCN is solid at room temperature, its 1:1 volume ratio mixture with DMC co-solvent is liquid. According to the invention, a preferred electrolyte solvent is a mixture of a DMC and SCN, most preferably in the 1:1 volumetric ratio. It has been found that this mixture gives higher ionic conductivity of the LiDFOB salt than the dimethylcarbonate : adiponitrile solvent mixture based electrolyte of reference [1].

It has been surprisingly discovered that certain polymers can be beneficial additives to the disclosed electrolyte (here termed polymer additives). The polymer additive according to the invention may be an oxygen-rich polymer additive. The polymer additive according to the invention may be highly soluble in the disclosed electrolyte. Oxygen-rich polymer here means a polymer having an atomic mole fraction of oxygen in the polymer preferably greater than 7% and more preferably greater than 10% and more preferably greater than 15% and most preferably greater than 20% or having preferably greater than 15% and more preferably greater than 25% and more preferably greater than 35% and most preferably greater than 40% mass fraction of oxygen in the polymer. The preferred polymer additives according to the invention are highly soluble in the electrolyte. Highly soluble polymer additives here means a polymer additive being preferably greater than 5% mass fraction and more preferably greater than 8% and more preferably greater than 11% and most preferably greater than 12% soluble.

A preferred polymer additive according to the invention is poly(methyl vinyl ether - alt - maleic anhydride). Poly(methyl vinyl ether - alt - maleic anhydride) is an oxygen-rich polymer additive. Other polymer additives, including, but not limited to, other oxygen-rich polymer additives, are possible according to the invention. With regard to poly(methyl vinyl ether - alt - maleic anhydride) polymer additive, this invention allows any ratio between the methyl-vinyl-ether (C₃H₆O) and maleic-anhydride (C₃H₆O) polymer constituents in the poly(methyl vinyl ether - alt - maleic anhydride). Preferably, the mass ratio between the methyl-vinyl-ether (C₃H₆O) and maleic-anhydride (C₃H₆O) polymer constituents is between 0.001:1 and 1:0.001 and more preferably between 0.01:1 and 1:0.01 and more preferably between 0.1:1 and 1:0.1 and most preferably 1:1.

Although the electrolyte's viscosity becomes significantly higher after the addition of one or more of the abovesaid polymer additives, its ionic conductivity is found to not dramatically decrease. For example, the addition of 12 w% poly(methyl vinyl ether - alt - maleic anhydride) additive was found to reduce the electrolyte conductivity by only approximately 32%. As shown in Figure 1, similar battery cell capacity evolution can be achieved either with or without the polymer additive, however, the obtained capacity results are slightly better without the polymer additive. It has been surprisingly found that one or more of the above said polymer additives are highly advantageous when a metallic alkali anode is used. The anode according to the invention is preferably a metallic lithium based anode, but other metallic alkali metals are possible according to the invention. Without the polymer additive in carbonate : nitrile solvent based electrolytes, alkali metals in general, and lithium in particular, tend to grow dendrites during charging. Such dendrites may reduce the Coulombic efficiency and create internal short-circuit risk. In contrast, when one or more of the above said polymer additives has been used in the electrolyte, preferably in more than 5 w% and more preferably in more than 10 w% mass ratio, the electrochemical cycling of alkali metals in general, and lithium in particular, was surprisingly found to be dendrite-free and long-term stable. Figures 4 - 5 show the long-term cycling data of a cell comprising metallic lithium anode and LMFP cathode. The cycling program employed constant current discharge cycles, and constant current charging until a 4.2 V threshold, followed by constant voltage charging at 4.2 V. The cell gave a stable capacity for the observed duration. During the discharge cycles, an increase of the anodic electrode-electrolyte interface resistance would have been observed as a decrease of discharged energy. As seen in Figure 4, the discharged energy remained very stable during the cycling process. During the charging cycles, an increase of the anodic electrode-electrolyte interface resistance would have been observed as a lengthening of charging time, since part of the cell charging was in constant voltage mode. As seen in Figure 5, the charging time also remained stable during the cycling process. Altogether, these data indicate a very stable anodic electrode-electrolyte interface, which allows long-term stable and dendrite-free cycling of the lithium anode, or other alkali metal based anodes.

According to the invention, the electrolyte may include a further one or more electrolyte additives, here termed electrolyte additives. The electrolyte additive according to the invention may be an SEI (solid electrolyte interface) improving additive. The electrolyte additive according to the invention may be a fluorinated carbonate additive. The fluorinated carbonate according to the invention may be a fluoro-ethylenecarbonate (4-fluoro-1,3-dioxolan-2-one, referred to as FEC). Other electrolyte additives or combinations of electrolyte additives are possible according to the invention.

It has been surprisingly discovered that the polymer additive and the SEI improving electrolyte additive may have a synergistically beneficial effect. As shown in Figures 2 and 3, the cycling stabilities of an exemplary anode and cathode according to the invention are particularly high when both poly(methyl vinyl ether - alt - maleic anhydride) and FEC additives are present in the electrolyte.

Suitable anode and cathode electrodes, which may be stably cycled in the herein disclosed electrolyte are disclosed. In general, any anode and/or cathode which may be compatible with the disclosed electrolyte and/or derivatives thereof (i.e., in which the electrolyte comprises components in addition to the disclosed electrolyte) is possible according to the invention. Examples of anodes according to the invention include, but are not limited to, various forms and/or allotropes of carbon, lithium titanate (LTO), tin/cobalt alloy and/or silicon/carbon. The anode may be a metallic alkali anode, such as metallic sodium or lithium anode. Other anode materials are possible according to the invention. The carbon according to the invention may be, e.g., hard carbon and/or graphite. Examples of cathodes include, but are not limited to, lithium manganese iron phosphate (LMFP or LFMP), lithium iron phosphate (LFP), lithium cobalt oxide (LCO), lithium manganese oxide (LMO) and/or lithium nickel manganese cobalt oxide (NMC). Other cathode materials are possible according to the invention.

According to one embodiment of the invention, the concentration of FEC additive may have a volume fraction between 0.5 vol% and 20 vol% and more preferably between 1 vol% and 16 vol% and more preferably between 2 vol% and 13 vol% and most preferably between 4 vol% and 11 vol%. In one embodiment of the invention, the concentration of FEC additive may have a volume fraction of approximately 10 vol%.

According to one embodiment of the invention, succinonitrile (SCN) and/or malononitrile (MLN) (alone or in combination) may be employed in high concentration and so may be considered to be a solvent in the context of the invention as opposed to being an additive. According to one embodiment of the invention, succinonitrile (SCN) and/or malononitrile (MLN) (alone or in combination) may be employed in a volume fraction between 30 vol% and 60 vol%. The SCN and/or MLN (alone or in combination) concentration should be high to act as a solvent. However, to achieve the desired effect and be liquid in a useful operational temperature range (e.g. around room temperature) the concentration of SCN and/or MLN (alone or in combination) in the mixture cannot be too high.

According to one embodiment of the invention, the electrolyte may be liquid during electrochemical cell operation. According to one embodiment of the invention, the electrolyte is not a gel during electrochemical cell operation.

### EXAMPLES

A cobalt-free battery cathode which has gained recent attention is LiMnₓFe₁₋ₓPO₄ (abbreviated as LMFP, also known as LFMP). We tested the cycling stability of LMFP cathodes at a 4.2 V charging voltage limit, and investigated the effect of electrolyte additives. Figure 2 shows the resulting cathode stability of the LMFP electrodes in different electrolyte variants and, in particular, shows the discharge capacity evolution of LMFP cathodes with respect to the charge-discharge cycle number. The scale is normalized to the initial discharge capacity of each electrode. In all cases, the initial gravimetric discharge capacity is approximately 150 mAh/g with respect to the LMFP weight. The electrolyte solvent comprises 1:1 volumetric ratio of DMC : SCN, and further comprises 12 weight! poly(methyl vinyl ether - alt - maleic anhydride) additive, and further comprises 1 molar LiDFOB salt. The employed further electrolyte additive is indicated in the figure. It is found that the electrode stability in one embodiment of the disclosed electrolyte (LiDFOB salt in DMC and SCN solvent (1:1 volumetric ratio) with 12 weight! poly(methyl vinyl ether - alt - maleic anhydride) additive) is relatively stable even without further additive, and it is highly stable in the electrolyte further comprising 2 weight! fluoro-ethylenecarbonate (FEC) electrolyte additive. This result is particularly surprising, since LMFP cathodes show definite fading in similar but polymer-free electrolytes, even with the use of FEC additive [1]. Without intending to be bound by theory, we ascribe this improvement to the complementary beneficial effects of the employed polymer additive, which is preferably poly(methyl vinyl ether - alt - maleic anhydride), and the employed electrolyte additive, which is preferably FEC. Other anodes, cathodes, electrolyte compositions, polymer additives and electrolyte additives are possible according to the invention.

In one preferred formulation, the electrolyte solvent comprises 1:1 volumetric ratio of DMC : SCN, and further comprises 12 weight! poly(methyl vinyl ether - alt - maleic anhydride) additive and 2 weight% FEC additive, and further comprises 1 molar LiDFOB salt. Even though 65 weight! of the electrolyte constituents are solid at room temperature, the resulting electrolyte was found to remain liquid down to at least -35 °C. In another preferred formulation, the electrolyte solvent comprises 1:1 volumetric ratio of DMC : SCN, and further comprises 2 weight% FEC additive, and further comprises 1 molar LiDFOB salt. The resulting electrolyte was also found to remain liquid down to at least -35 °C. Table 2 shows the room temperature (20 °C) ionic conductivity of these preferred electrolyte formulations - with and without the polymer additive. This conductivity data shows that the use of succinonitrile is advantageous over the use of larger nitrile molecules, and that the electrolyte conductivity stays sufficiently high even with 12 w% of the preferred polymer additive present in the electrolyte. Other anodes, cathodes, electrolyte compositions, polymer additives and electrolyte additives are possible according to the invention.

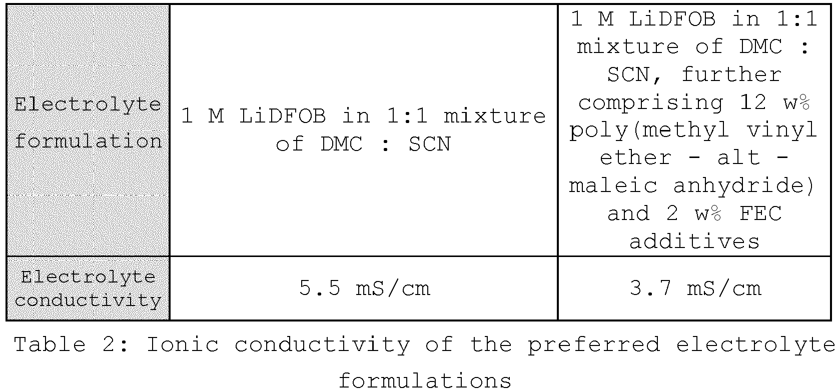

According to the invention, the electrochemical cell may employ anodes comprising carbon. Carbon may be in any form compatible with the electrolyte. Examples include, but are not limited to graphite, hard carbon, graphene, amorphous carbon, fullerenes, carbon nanotubes, carbon nanobuds, carbon nanohorns, Y-carbon, carbon nanofoam and/or any combination thereof. Other forms of carbon are possible according to the invention. We investigated the stability of the graphite anodes in the above said preferred electrolyte formulation. Figure 3 shows the resulting anode stability of the graphite electrodes. In particular, Figure 3 shows the discharge capacity evolution of a graphite anode with respect to the charge-discharge cycle number. The scale is normalized to the initial discharge capacity of the electrode. The electrolyte solvent comprises 1:1 volumetric ratio of DMC : SCN, and further comprises 12 weight! poly(methyl vinyl ether - alt - maleic anhydride) additive and 2 weight% FEC additive, and further comprises 1 molar LiDFOB salt. Similar cycling stability is obtained with hard carbon anodes. Other carbon anodes are possible according to the invention. This demonstrated stable cycling performance establishes that the herein disclosed electrolyte formulation allows stable cycling of both Li-ion battery electrodes. Other anodes, cathodes, electrolyte compositions, polymer additives and electrolyte additives are possible according to the invention.

While the foregoing examples are illustrative of the principles of the present invention in one or more particular applications, it will be apparent to those of ordinary skill in the art that numerous modifications in form, usage and details of implementation can be made without departing from the principles and concepts of the invention. Accordingly, it is not intended that the invention be limited, except as by the claims set forth below.
[1] Journal of Power Sources 397 (2018) 52-58 (https://doi.org/10.1016/j.jpowsour.2018.07.004)

## Claims

1. An electrolyte for an electrochemical battery cell comprising:
i. a carbonate : nitrile type solvent mixture based electrolyte, wherein the electrolyte comprises at least one polymer additive; or
ii. a dimethylcarbonate (DMC) : malononitrile (MLN) solvent mixture based electrolyte or a dimethylcarbonate (DMC) : (succinonitrile (SCN) : malononitrile (MLN)) solvent mixture based electrolyte, wherein the electrolyte further comprises an alkali salt and the electrolyte is liquid during electrochemical operation.

2. The electrolyte of claims 1, wherein the nitrile type solvent comprises succinonitrile (SCN) and/or malononitrile (MLN).

3. The electrolyte of any of claims 1 - 2, wherein the carbonate type solvent is dimethylcarbonate (DMC).

4. The electrolyte of any of claims 1 - 3, wherein the alkali salt cation is lithium cation.

5. The electrolyte cell of any of claims 1 - 4, wherein the alkali salt anion comprises an oxalato-borate group.

6. The electrolyte of any of claims 1 - 5, wherein the alkali salt is lithium-difluoro(oxalato)borate (LiDFOB).

7. The electrolyte of any of claims 1 - 6, wherein the electrolyte comprises one or more electrolyte additives.

8. The electrolyte of claim 7, wherein the electrolyte additive is a fluorinated carbonate additive.

9. The electrolyte of any of claims 1 - 8, wherein the electrolyte additive is fluoro-ethylenecarbonate (FEC).

10. The electrolyte of any of claims 1 - 3 or 4 - 9, wherein the polymer additive is poly(methyl vinyl ether - alt - maleic anhydride).

11. An electrochemical cell comprising the electrolyte of any of claims 1 - 10 and an anode and a cathode.

12. The electrochemical cell of claim 11, wherein the cathode comprises LiMnₓFe₁₋ₓPO₄ (LMFP or LFMP), lithium iron phosphate (LFP), lithium cobalt oxide (LCO), lithium manganese oxide (LMO), and/or lithium nickel manganese cobalt oxide (NMC).

13. The electrochemical cell of any of claims 11 - 12, wherein the anode comprises carbon, lithium titanate (LTO), tin/cobalt alloy and/or silicon/carbon.

14. The electrochemical cell of claim 13, wherein the carbon is graphite and/or hard carbon.

15. The electrochemical cell of any of claims 11 - 14, wherein the anode comprises a metallic alkali metal.

16. The electrochemical cell of claim 15, wherein the metallic alkali metal is lithium.

17. The use of the electrolyte of any of claims 1 - 10 or the electrochemical cell of any of claims 12 - 16 in a device.

## Patentansprüche

1. Elektrolyt für eine elektrochemische Batteriezelle, umfassend:
i. einen Elektrolyten auf Basis eines Lösungsmittelgemischs vom Carbonat : Nitril-Typ, wobei der Elektrolyt mindestens ein Polymer-Additiv umfasst; oder
ii. einen Elektrolyten auf Basis eines Dimethylcarbonat (DMC) : Malononitril (MLN)-Lösungsmittelgemischs oder einen Elektrolyten auf Basis eines Dimethylcarbonat(DMC) : (Succinonitril(SCN) : Malononitril (MLN))-Lösungsgemischs, wobei der Elektrolyt ferner ein Alkalisalz umfasst und der Elektrolyt während des elektrochemischen Betriebs flüssig ist.

2. Elektrolyt gemäß Anspruch 1, wobei das Lösungsmittel vom Nitril-Typ Succinonitril (SCN) und/oder Malononitril (MLN) umfasst.

3. Elektrolyt gemäß einem der Ansprüche 1 - 2, wobei das Lösungsmittel vom Carbonat-Typ Dimethylcarbonat (DMC) ist.

4. Elektrolyt gemäß einem der Ansprüche 1 - 3, wobei das Alkalisalzkation ein Lithiumkation ist.

5. Elektrolytzelle gemäß einem der Ansprüche 1 - 4, wobei das Alkalisalzanion eine Oxalatoborat-Gruppe umfasst.

6. Elektrolyt gemäß einem der Ansprüche 1 - 5, wobei das Alkalisalz Lithiumdifluor(oxalato)borat (LiDFOB) ist.

7. Elektrolyt gemäß einem der Ansprüche 1 - 6, wobei der Elektrolyt ein oder mehrere Elektrolyt-Additive umfasst.

8. Elektrolyt gemäß Anspruch 7, wobei das Elektrolyt-Additiv ein fluoriertes Carbonat-Additiv ist.

9. Elektrolyt gemäß einem der Ansprüche 1 - 8, wobei das Elektrolyt-Additiv Fluorethylencarbonat (FEC) ist.

10. Elektrolyt gemäß einem der Ansprüche 1 - 3 oder 4 - 9, wobei das Polymer-Additiv Poly(methylvinylether-altmaleinsäureanhydrid) ist.

11. Elektrochemische Zelle, umfassend den Elektrolyten gemäß einem der Ansprüche 1 - 10 und eine Anode und eine Kathode.

12. Elektrochemische Zelle gemäß Anspruch 11, wobei die Kathode LiMnₓFe₁₋ₓPO₄ (LMFP oder LFMP), Lithiumeisenphosphat (LFP), Lithiumcobaltoxid (LCO), Lithiummanganoxid (LMO) und/oder Lithiumnickelmangancobaltoxid (NMC) umfasst.

13. Elektrochemische Zelle gemäß einem der Ansprüche 11 - 12, wobei die Anode Kohlenstoff, Lithiumtitanat (LTO), Zinn/Cobalt-Legierung und/oder Silicium/Kohlenstoff umfasst.

14. Elektrochemische Zelle gemäß Anspruch 13, wobei der Kohlenstoff Graphit und/oder Hartkohle ist.

15. Elektrochemische Zelle gemäß einem der Ansprüche 11 - 14, wobei die Anode ein metallisches Alkalimetall umfasst.

16. Elektrochemische Zelle gemäß Anspruch 15, wobei das metallische Alkalimetall Lithium ist.

17. Verwendung des Elektrolyten gemäß einem der Ansprüche 1 - 10 oder der elektrochemischen Zelle gemäß einem der Ansprüche 12 - 16 in einer Vorrichtung.

## Revendications

1. Electrolyte pour une cellule de batterie électrochimique, comprenant :
i. un électrolyte à base d'un mélange solvant de type carbonate / nitrile, lequel électrolyte comprend au moins un additif polymère ; ou
ii. un électrolyte à base d'un mélange solvant de carbonate de diméthyle (DMC) / malononitrile (MLN) ou un électrolyte à base d'un mélange solvant de carbonate de diméthyle (DMC) / (succinonitrile (SCN) / malononitrile (MLN)), lequel électrolyte comprend en outre un sel alcalin, et lequel électrolyte est liquide durant un fonctionnement électrochimique.

2. Electrolyte selon la revendication 1, dans lequel le solvant de type nitrile comprend du succinonitrile (SCN) et/ou du malononitrile (MLN).

3. Electrolyte selon l'une quelconque des revendications 1 et 2, dans lequel le solvant de type carbonate est le carbonate de diméthyle (DMC).

4. Electrolyte selon l'une quelconque des revendications 1 à 3, dans lequel le cation de sel alcalin est un cation lithium.

5. Cellule électrolytique selon l'une quelconque des revendications 1 à 4, dans laquelle l'anion de sel alcalin comprend un groupe oxalato-borate.

6. Electrolyte selon l'une quelconque des revendications 1 à 5, dans lequel le sel alcalin est le difluoro(oxalato)borate de lithium (LiDFOB).

7. Electrolyte selon l'une quelconque des revendications 1 à 6, lequel électrolyte comprend un ou plusieurs additifs d'électrolyte.

8. Electrolyte selon la revendication 7, dans lequel l'additif d'électrolyte est un additif fluorocarbonate.

9. Electrolyte selon l'une quelconque des revendications 1 à 8, dans lequel l'additif d'électrolyte est un fluoro-éthylènecarbonate (FEC).

10. Electrolyte selon l'une quelconque des revendications 1 à 3 et 4 à 9, dans lequel l'additif polymère est le poly(méthylvinyléther-alt-anhydride maléique) .

11. Cellule électrochimique comprenant l'électrolyte de l'une quelconque des revendications 1 à 10 et une anode et une cathode.

12. Cellule électrochimique selon la revendication 11, dans laquelle la cathode comprend du LiMnₓFe₁₋ₓPO₄ (LMFP ou LFMP), du phosphate de fer lithié (LFP), de l'oxyde de cobalt lithié (LCO), de l'oxyde de manganèse lithié (LMO), et/ou de l'oxyde de nickel-manganèse-cobalt lithié (NMC).

13. Cellule électrochimique selon l'une quelconque des revendications 11 et 12, dans laquelle l'anode comprend du carbone, du titanate de lithium (LTO), un alliage d'étain/cobalt et/ou du silicium/carbone.

14. Cellule électrochimique selon la revendication 13, dans laquelle le carbone est du graphite et/ou du carbone dur.

15. Cellule électrochimique selon l'une quelconque des revendications 11 à 14, dans laquelle l'anode comprend un métal alcalin métallique.

16. Cellule électrochimique selon la revendication 15, dans laquelle le métal alcalin métallique est le lithium.

17. Utilisation de l'électrolyte de l'une quelconque des revendications 1 à 10 ou de la cellule électrochimique de l'une quelconque des revendications 12 à 16 dans un dispositif.
